# EUROPEAN PATENT SPECIFICATION

(11) **EP 1 975 011 B1**
(45) Date of publication and mention of the grant of the patent: **13.10.2010**
(21) Application number: 08004808.5
(22) Date of filing: 14.03.2008
(51) Int. Cl.: B60R 21/00, B60R 22/02

(54) **Seat belt retractor, seat belt apparatus, and seat belt winding method**
Retraktor, Sicherheitsgurtvorrichtung und Sicherheitsgurt-Aufwickelverfahren
Rétracteur de ceinture de sécurité, appareil de ceinture de sécurité, et procédé d'enroulement de ceinture de sécurité

(30) Priority: 30.03.2007 JP 2007093231
(43) Date of publication of application: 01.10.2008
(73) Proprietor: Takata Corporation, Tokyo 106-8510 (JP)
(72) Inventor: Takao, Masato, Tokyo 106-8510 (JP); Tanaka, Koji, Tokyo 106-8510 (JP); Murakami, Daisuke, Tokyo 106-8510 (JP)
(74) Representative: Banzer, Hans-Jörg

(56) References cited:
- EP-A- 1 818 225
- US-A1- 2006 022 079

## Description

### Technical Field of the Invention

The present invention relates to a technology of seat belt winding. Particularly, the present invention relates to a seat belt retractor for winding up a seat belt by means of a motor and a seat belt apparatus with the seat belt retractor, and to a method of winding up a seat belt by means of a motor.

### Related Art

A vehicle such as an automobile is provided with a seat belt apparatus for restraining an occupant in a seat. The seat belt apparatus comprises a seat belt (sometimes called webbing), a buckle, a tongue plate, a retractor, and the like.

Among these components, the retractor is a device for winding up the seat belt. The retractor comprises not only a winding mechanism using spring force but also a pretensioner which moves a piston by explosion of powder or the like to strongly pull the belt in the event of an emergency such as a vehicle collision, thereby restraining the occupant in the seat. Recently, there is a motorized retractor which comprises a motor so as to wind up the seat belt by the motor.

For reducing the electric power consumption, the motorized retractor is adapted such that electric power is supplied to the motor when winding up the seat belt and the supply of the electric power to the motor is stopped and the motor is turned off after completion of winding-up of the seat belt. However, for example, when the seat belt is caught by something such as an arm of the occupant even during the winding-up of the seat belt or when the occupant starts the withdrawal of the seat belt during the winding-up of the seat belt, the motor should be stopped and then suitably controlled.

There is a motorized retractor which is adapted to handle such a case (for example, see JP-A-2005-280497). The motorized retractor disclosed in JP-A-2005-280497 has such a function that the motorized retractor is set to a standby state where the winding-up is stopped for a predetermined time period when an overload is detected during the winding-up of the seat belt and restarts the winding-up of the seat belt after a lapse of the predetermined time period. Because of the function, the motorized retractor can suitably handle the case where the seat belt is caught and the case where the withdrawal of the seat belt is started by the occupant during the winding-up.

A seat belt retractor and a seat belt winding method according to the preamble of independent claim 1 and independent claim 5, respectively, is known from US 2006/0022079 A1. In particular, this document discloses a seat belt retractor having a spool for winding up a seat belt by means of actuation of a motor, whereby the rotation of the output shaft of the motor is stopped if the rotation of the spool in the take-up direction is obstructed, for example when a part of the seat belt and/or the tongue plate attached to the seat belt becomes caught between a closed door panel and a peripheral edge of a door opening. When the rotation of the output shaft of the motor is stopped in this manner, an integrated stop time after the rotation of the output shaft stops is computed by a computing means, and a difference between an integrated take-up time calculated after the motor begins to drive the spool and the integrated stop time is calculated by the computing means. If the external force obstructing the rotation of the spool in the take-up direction is eliminated, for example when the seat belt and/or the tongue plate is removed from between the door panel and the peripheral edge of the door opening, the spool is again rotated in the take-up direction, and the integration of the integrated stop time is stopped. When the computing result of the difference between the integrated take-up time and the integrated stop time in the computing means reaches a predetermined time, a corresponding control means determines that the seat belt has been completely taken up on the spool, and cuts off the power to the motor.

### Disclosure of the Invention

### Problems to be solved by the Invention

By the technology proposed in the aforementioned JP-A-2005-280497, the possibility that the seat belt is completely wound up by the winding-up action of the seat belt when the occupant gets off the vehicle must be high. Though there is a little possibility that the winding-up of the seat belt is not completed, it is undeniable that there is still a possibility.

If the action of winding up the seat belt when the occupant gets off the vehicle is ended without completing the winding-up, the seat belt and/or tongue plate may be left on the seat. This not only makes the appearance worse but also interrupts the occupant from getting on the vehicle.

The present invention was made in view of the aforementioned conditions and an object of the present invention is to provide a seat belt retractor which has improved reliability of the seat belt winding-up performance and still can reduce the frequency of unnecessary actuations of the motor, to provide a seat belt apparatus comprising the seat belt retractor, and to provide a method of winding up a seat belt.

### Means to solve the Problems

According to the invention, this object is achieved by a seat belt retractor as defined in claim 1, a seat belt apparatus as defined in claim 4 and a seat belt winding method as defined in claim 5. The dependent claims are preferred and advantageous embodiments of the present invention.

A seat belt retractor according to the first aspect of the present invention comprises a seat belt winding means for winding up a seat belt by means of actuation of a motor; and a control means which repeats, under a predetermined condition, a process of stopping the actuation of said motor when an overload of said motor is detected, and restarting the actuation of said motor after a lapse of a predetermined time period, wherein said control means comprises: a getting-on/off action detecting means for detecting an action of an occupant for getting on or off a vehicle; and a retry determining means which determines, using criteria, whether or not it is required to restart the actuation of said motor which is stopped by detection of the overload, wherein the criteria for the case that the occupant gets on the vehicle and for the case that the occupant gets off the vehicle are different from each other, wherein said criteria are provided such that said retry determining means determines that it is not required to restart the actuation of said motor in the case that the occupant gets on the vehicle as compared to the case that the occupant gets off the vehicle.

In the seat belt retractor having the aforementioned structure, in the case that the occupant gets off the vehicle, said retry determining means determines that it is not required to restart the actuation of said motor when a number of times of starting the actuation of said motor reaches a first number of times, and in the case that the occupant gets on the vehicle, said retry determining means determines that it is not required to restart the actuation of said motor when the number of times of starting the actuation of said motor reaches a second number of times lower than said first number of times.

Said control means may further comprise a means for clocking a motor actuating time period from the start to the stop of the actuation of said motor, wherein in the case that the occupant gets off the vehicle, said retry determining means determines that it is not required to restart the actuation of said motor when said motor actuating time period is shorter than a predetermined time period a third number of times in a row, and in the case that the occupant gets on the vehicle, said retry determining means determines that it is not required to restart the actuation of said motor when said motor actuating time period is shorter than the predetermined time period a fourth number of times in a row, said fourth number of times being smaller than said third number of times.

It is preferable that a signal indicating the wearing or non-wearing of the seat belt and a signal indicating the door open or close are inputted into said control means, and said getting-on/off action detecting means detects an action of the occupant for getting on or off the vehicle according to these signals.

A seat belt apparatus according to the second aspect of the present invention comprises: a seat belt; a tongue plate which is slidably attached to said seat belt; a buckle to which said tongue plate is inserted and latched; and a seat belt retractor according to the first aspect of the present invention.

A seat belt winding method according to the third aspect of the present invention is a method for repeating, under a predetermined condition, a process of stopping the actuation of a motor, which provides power for winding up a seat belt, when an overload of said motor is detected during the actuation of said motor, and restarting the actuation of said motor after a lapse of a predetermined time period, wherein said method comprises: a getting-on/off action detecting step for detecting an action of an occupant for getting on/off the vehicle; and a retry determining step for determining, using criteria, whether or not it is required to restart the actuation of said motor which is stopped by detection of the overload, wherein the criteria for the case that the occupant gets on the vehicle and for the case that the occupant gets off the vehicle are different from each other, wherein said criteria are provided such that said retry determining step determines that it is not required to restart the actuation of said motor in the case that the occupant gets on the vehicle as compared to the case that the occupant gets off the vehicle.

In the seat belt winding method as mentioned above, said retry determining step is adapted such that, in the case that the occupant gets off the vehicle, it is determined that it is not required to restart the actuation of said motor when the number of times of starting the actuation of said motor reaches a first number of times, and in the case that the occupant gets on the vehicle, it is determined that it is not required to restart the actuation of said motor when the number of times of starting the actuation of said motor reaches a second number of times lower than said first number of times.

The seat belt winding method preferably further comprises a step of clocking the motor actuating time period from the start to the stop of the actuation of said motor, wherein, in said retry determining step, in the case that the occupant gets off the vehicle, it is determined that it is not required to restart the actuation of said motor when said motor actuating time period is shorter than a predetermined time period a third number of times in a row, and in the case that the occupant gets on the vehicle, it is determined that it is not required to restart the actuation of said motor when said motor actuating time period is shorter than the predetermined time period a fourth number of times in a row, said fourth number of times being smaller than said third number of times.

It is preferable that, in said getting-on/off action detecting step, an action of the occupant for getting on/off the vehicle is detected based on a signal indicating the wearing or non-wearing of the seat belt and a signal indicating the door open or close.

### Effects of the Invention

As mentioned above, according to the present invention, the winding-up action of the seat belt is conducted not only for the case that the occupant gets off the vehicle but also in the case that the occupant gets on the vehicle. It is likely determined that it is not required to restart the actuation of the motor in the case that the occupant gets on the vehicle as compared to the case that the occupant gets off the vehicle. Therefore, the frequency of unnecessary actuations of the motor can be reduced and the reliability of the seat belt winding-up performance is improved.

### Brief Explanation of the drawings

Fig. 1 is an illustration schematically showing an arrangement of a seat belt apparatus comprising a seat belt retractor according to an embodiment of the present invention.
Fig. 2 is an illustration schematically showing an arrangement of the seat belt retractor according to the embodiment of the present invention.
Fig. 3 is a block diagram showing an arrangement of a controller and a connection thereof.
Fig. 4 is a block diagram showing an arrangement of a function for handling a seat belt winding-up process of a control unit shown in Fig. 3.
Fig. 5 is a table for explaining the method of detecting a getting-on/off action by a getting-on/off action detecting section of the control unit shown in Fig. 3.
Fig. 6 is a flow chart showing procedures of the seat belt winding-up process according to the embodiment of the present invention.
Fig. 7 is a flow chart showing procedures of the retry judgment according to the embodiment of the present invention.

### Best Modes for carrying out the Invention

Hereinafter, an embodiment of a seat belt retractor according to the present invention will be described with reference to attached drawings.

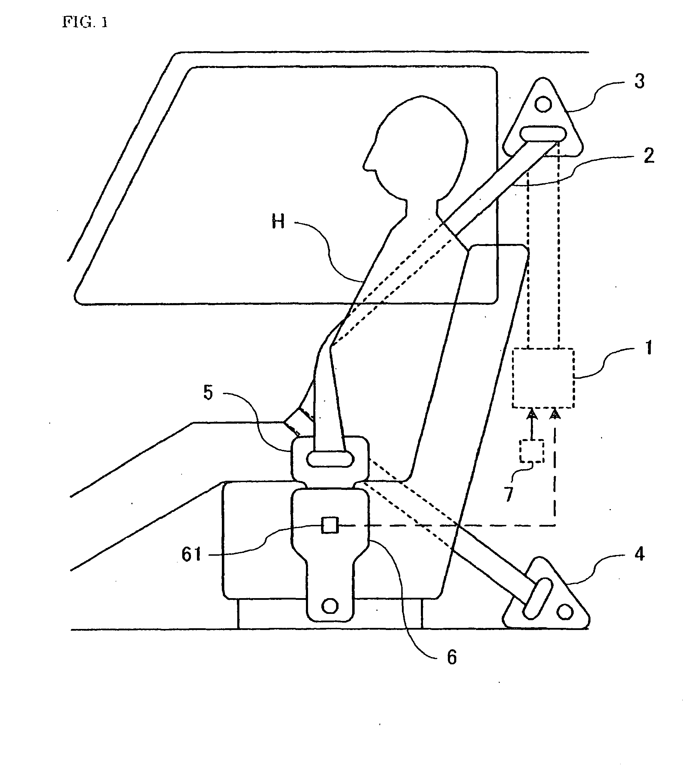

Fig. 1 is an illustration schematically showing an arrangement of a seat belt apparatus comprising a seat belt retractor according to an embodiment of the present invention. The seat belt apparatus is attached to a vehicle seat and comprises, as shown in this drawing, a seat belt retractor 1, a seat belt 2, a deflection fitting 3, a belt anchor 4, a tongue plate 5, a buckle 6, and a door sensor 7.

The seat belt retractor 1 is a device of winding up the seat belt 2 by means of power of a motor and is fixed to an interior part of a side wall of a vehicle body. One end of the seat belt 2 is attached to the seat belt retractor 1 and the other end of the seat belt 2 passes through the deflection fitting 3 which is disposed around an upper portion of a center pillar and is attached to the belt anchor 4 which is fixed in the vicinity of the seat belt retractor 1.

The tongue plate 5 is supported by the seat belt 2 such that the tongue plate 5 is slidable in a predetermined range from a turn at the deflection fitting 3 to the belt anchor 4. The buckle 6 is fixed to the seat (or a floor of the vehicle body) and has a structure to which the tongue plate 5 is inserted and latched. The buckle 6 comprises a seat belt wearing sensor 61 which detects the latching of the tongue plate 5 so as to detect the wearing or cancellation of the wearing of the seat belt 2. The seat belt wearing sensor 61 outputs a detected signal to the seat belt retractor 1 via a wire.

When getting on the vehicle, an occupant H withdraws the seat belt 2 from the seat belt retractor 1 and inserts the tongue plate 5 into the buckle 6 to latch the buckle 6 with the tongue plate 5. Accordingly, the seat belt 2 is worn by the occupant H so that the upper part and lap part of the occupant H are restrained relative to the seat.

The door sensor 7 is a sensor for detecting whether a vehicle door is opened or closed, and outputs a detected signal (door open signal/door closed signal) to the seat belt retractor 1 via a wire. In this embodiment, the door sensor 7 is composed of a pair of sensor contacts which are disposed on the vehicle door side and on the vehicle body side, respectively.

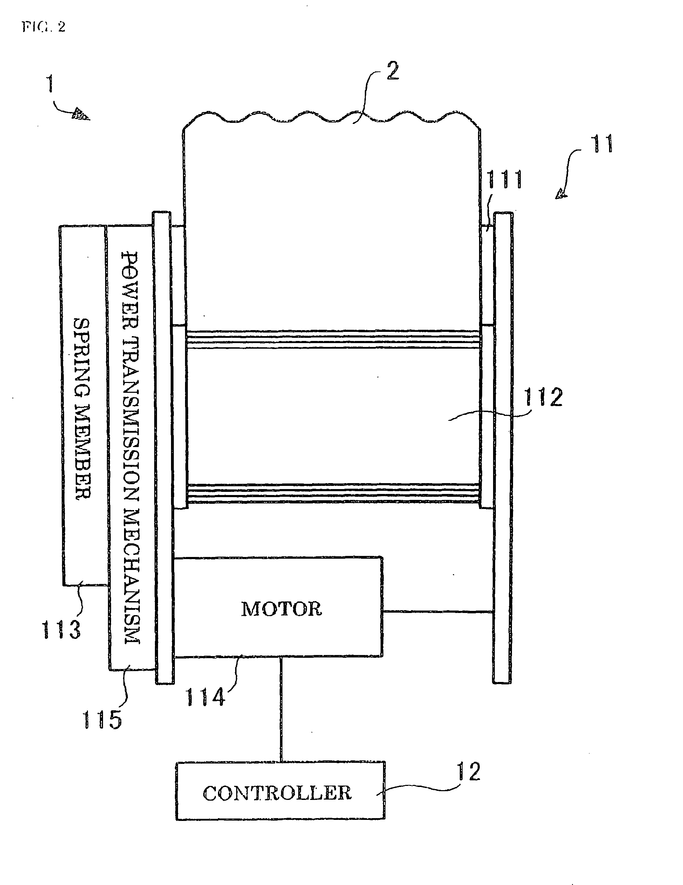

Fig. 2 is an illustration schematically showing the structure of the seat belt retractor 1. As shown in Fig. 2, the seat belt retractor 1 comprises a winding unit 11, which includes a frame 111, a spool 112, a spring member 113, a motor 114, and a power transmission mechanism 115, and a controller 12.

The spool 112 is rotatably supported by the frame 111 having a U-like shape. Attached to the outer surface of the spool 112 is an end of the seat belt 2. The spool 112 is rotated by the driving force of the motor 114, whereby the seat belt 2 is wound up by the seat belt retractor 1.

The spring member 113 always biases the spool 112 in the winding direction by means of spring force. The spring member 113 is supported by the frame 111 and is connected to the spool 112 via the power transmission mechanism 115.

The motor 114 is an electric motor for rotating the spool 112 and is supported by the frame 111. The power transmission mechanism 115 supported by the frame 111, similarly to the motor 114, is arranged between the motor 114 and the spool 112 to transmit the power of the motor 114 to the spool 112 with varying the speed (particularly, reducing the speed). Especially, the power transmission mechanism 115 comprises a spool-side pulley which is fixed to the rotary shaft of the spool 112, a motor-side pulley which is fixed to the rotary shaft of the motor 114, and a timing belt which is laid to extend between these pulleys with some tension (all of them are not shown). The power transmission mechanism 115 also has a clutch function so as to cancel the connection between the motor 114 and the spool 112 when the motor 114 is not actuated for the purpose of allowing the withdrawal of the seat belt 2 from the spool 112.

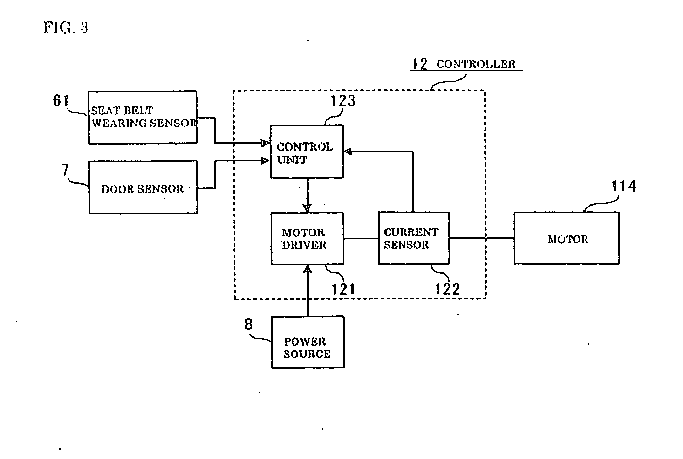

The controller 12 controls the actuation of the motor 114 and comprises, as shown in Fig. 3, a motor driver 121, a current sensor 122, and a control unit 123. The controller 12 is connected to the motor 114, a power source 8 for supplying the power for the motor 114, the seat belt wearing sensor 61, and the door sensor 7 via wires.

The motor driver 121 is connected to the power source 8 so that power supply voltage from the power source 8 is applied to the motor driver 121. The power source 8 may be a battery equipped on the vehicle. The motor driver 121 applies voltage to the motor 114 to actuate the motor 114 according to the control by the control unit 123.

The current sensor 122 is disposed between the motor driver 121 and the motor 114 to detect a value of current flowing through the motor 114. The current sensor 122 outputs a detected current value to the control unit 123.

The control unit 123 comprises a CPU (Central Processing Unit) which carries out a control program, a ROM (Read Only Memory) which stores the control program, a control parameter table, and the like, and a RAM (Random Access Memory) which is used as a work area when the control program is carried out.

The control unit 123 controls the motor driver 121 according to control parameters for controlling the motor (from the control parameter table), thereby controlling the motor 114 via the motor driver 121. Specifically, the control unit 123 controls the rotation of the motor 114 in the form of PWM (Pulse Width Modulation). Therefore, the control unit 123 generates a PWM signal of a predetermined duty ratio and outputs the generated PWM signal and a control signal indicating the rotational direction of the motor 114 to the motor driver 121. The motor driver 121 applies driving voltage, obtained by adjusting the power supply voltage according to the PWM signal, to the motor 114. Accordingly, the motor 114 rotates at a speed according to the predetermined duty ratio so that the seat belt 2 is wound up onto the spool 112.

Hereinafter the process of winding up the seat belt 2 (seat belt winding-up process) to be carried out by the seat belt retractor 1 when the occupant H gets on or off the vehicle will be described in detail.

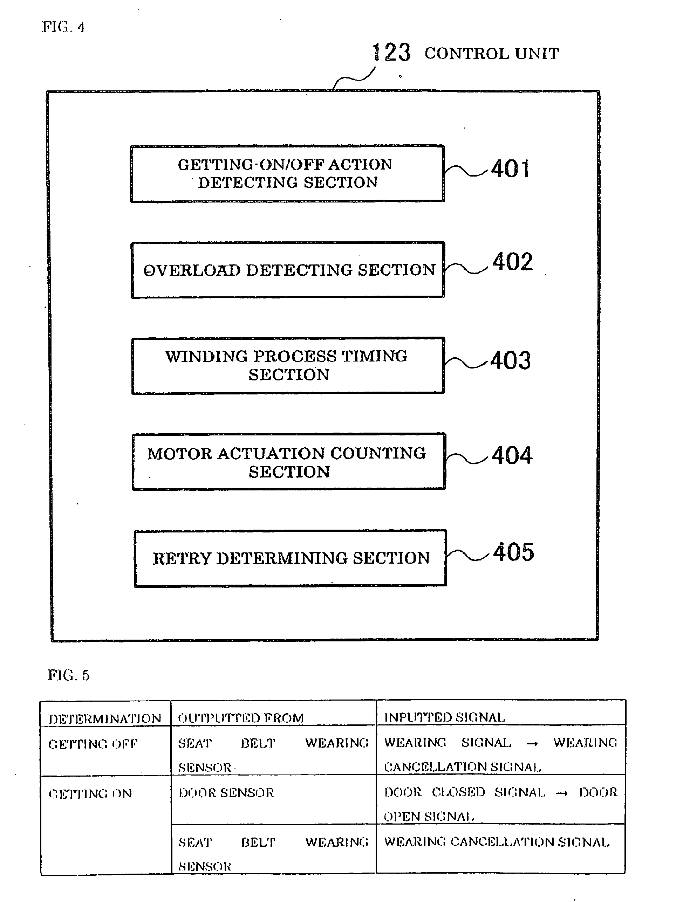

As a function for handling the seat belt winding-up process, the control unit 123 comprises, as shown in Fig. 4, a getting-on/off action detecting section 401, an overload detecting section 402, a winding process timing section 403, a motor actuation counting section 404, and a retry determining section 405.

The getting-on/off action detecting section 401 detects an action of the occupant H for getting on or off the vehicle based on a wearing signal/wearing cancellation signal from the seat belt wearing sensor 61 and a door open signal/door closed signal from the door sensor 7 when the seat belt winding-up process as will be described later is not conducted. As the action for getting on or off the vehicle is detected by the getting-on/off action detecting section 401, the control unit 123 starts the seat belt winding-up process as will be described later. The method taken by the getting-on/off action detecting section 401 for detecting the action for getting on or off the vehicle will be described with reference to Fig. 5.

As shown in a table of Fig. 5, when the inputted signal from the seat belt wearing sensor 61 is switched from a wearing signal to a wearing cancellation signal, the getting-on/off action detecting section 401 determines that the occupant H takes an action for getting off the vehicle (in other words, determines that the occupant H is about to get off the vehicle). As for the detection of the action for getting on the vehicle, when the inputted signal from the door sensor 7 is switched from a door closed signal to a door open signal and a wearing cancellation signal is inputted from the seat belt wearing sensor 61 (that is, the seat belt 2 is not worn), the getting-on/off action detecting section 401 determines that the occupant H takes an action for getting on the vehicle (in other words, determines that the occupant H is about to get on the vehicle).

Referring to Fig. 4, the overload detecting section 402 detects an overload applied to the motor 114 caused by the completion of winding-up, the catching of the seat belt by the body of the occupant H, the seat, or the door, or the start of withdrawal of the seat belt 2 by the occupant H. As the overload is detected, the control unit 123 commands the motor driver 121 (outputs a stopping signal) to stop the actuation (i.e. the rotation) of the motor 114. In this embodiment, the overload detecting section 402 compares a current value (a motor current value) detected by the current sensor 122 with a predetermined current value (a current threshold for detecting overload) and determines that the overload is detected when the motor current value is equal to or more than the current threshold for detecting overload (for example 5 A).

The winding process timing section 403 is provided for clocking the operating time period (execution time period) of the seat belt winding process by the seat belt retractor 1. In this embodiment, the winding process timing section 403 is composed of a software timer. Specifically, the winding process timing section 403 starts the clocking at the point when the getting-on/off action detecting section 401 detects an action of the occupant H for getting on/off the vehicle, that is, at the point of starting the seat belt winding-up process and continues the clocking until the seat belt winding-up process is terminated (the clocking is continued even when the motor 114 is stopped). Applications of the result of the clocking by the winding process timing section 403 (winding process time period) will be described later.

The motor actuation counting section 404 is a counter for counting the number of times of starting the actuation of the motor 114 (motor actuation number).

After an overload is detected by the overload detecting section 402 and the actuation of the motor 114 is stopped, the retry determining section 405 determines whether or not it is required to actuate the motor 114 again, in other words, whether or not it is required to wind up the seat belt 2 again (to retry) (retry judgment). In this case, the retry determining section 405 makes such a determination using different criteria in a case that the occupant H is about to get on and in a case that the occupant H is about to get off, respectively. The criteria are provided such that the retry determining section 405 more likely determines that it is not required to retry in the case that the occupant gets on the vehicle as compared to the case that the occupant gets off the vehicle. This is because it is highly probable that the seat belt 2 is in the state that the winding-up is completed or nearly completed when the occupant gets on the vehicle because of the winding-up when the occupant gets off the vehicle last time. The criteria is set as mentioned above for reducing the unnecessary actuation of the motor 114 when the occupant gets on the vehicle.

Specifically, the retry determining section 405 determines that the retry is not required when the number of times of starting the actuation of the motor 114 reaches a reference number of times which are previously determined corresponding to the case that the occupant gets on the vehicle and the case that the occupant gets off the vehicle. In this embodiment, the reference number of times for the case that the occupant gets off the vehicle (the first number of times) is set to four and the reference number of times for the case that the occupant gets on the vehicle (the second number of times) is set to two.

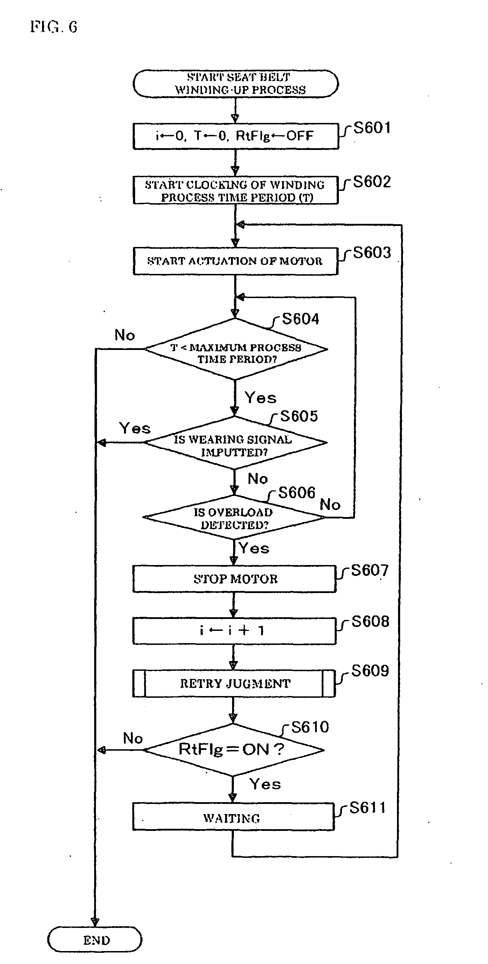

Fig. 6 is a flow chart showing procedures of the seat belt winding-up process according to this embodiment. The seat belt winding-up process is started by an action of the occupant H for getting on or off the vehicle detected by the getting-on/off action detecting section 401.

First, the control unit 123 of the controller 12 sets various parameters (i, T, RtFlg) to be in their initial states (Step S601). Here, "i" is a parameter in which the result of the counting (motor actuation number) by the motor actuation counting section 404 is stored.

"T" is a parameter in which the result of the clocking (winding process time period) by the winding process timing section 403 is stored.

"RtFlg" is a flag in which the result of the retry judgment by the retry determining section 405 is stored. If the RtFlg is ON, the flag indicates that it is required to retry (that is, to actuate the motor 114 to wind up the seat belt 2 again). If the RtFlg is OFF, the flag indicates that it is not required to retry (that is, it is required to terminate the seat belt winding-up process).

Then, the winding process timing section 403 starts the clocking of the winding-up process (Step S602). In synchronism with this, the control unit 123 outputs the actuation signal to the motor driver 121. Accordingly, the motor 114 is started to rotate so that the seat belt 2 is wound up onto the spool 112 (Step S603).

Then, it is determined whether or not the winding process time period (T) is shorter than the maximum process time period (Step S604). The maximum process time period is a time period far exceeding the normal operation time period for the seat belt winding-up process by the normal seat belt retractor 1 and it is believed that the winding process time period in the normal operation never reaches the maximum process time period. Therefore, when the winding-up process time period (T) reaches the maximum process time period (No in step S604), it can be determined that it is impossible to continue the winding-up due to some defect such as failure so that the process is terminated. The maximum process time period is derived from tests, measurements, and theory and is previously stored in the control parameter table in memory such as a ROM. In this embodiment, the maximum process time period is set to 10 seconds.

When the winding-up process time period (T) does not reach to the maximum process time period (Yes in step S604), the control unit 123 checks whether or not the wearing signal from the seat belt wearing sensor 61 is inputted into the controller 12 (Step S605). When the wearing signal is inputted (Yes in step S605), this means that the occupant H wears the seat belt 2 again so that the process is terminated.

When the wearing signal is not inputted (No in step S605), the condition of detection of an overload is checked (Step S606). When the overload is detected (Yes in step S606), the control unit 123 stops the actuation of the motor 114 via the motor driver 121 (Step S607). Therefore, the winding-up of the seat belt 2 is stopped. On the other hand, when the overload is not detected (No in step S606), the processes from step S604 are repeated.

As the actuation of the motor 114 is stopped because of the detection of the overload, the motor actuation counting section 404 counts up the motor actuation number (i) (Step S608).

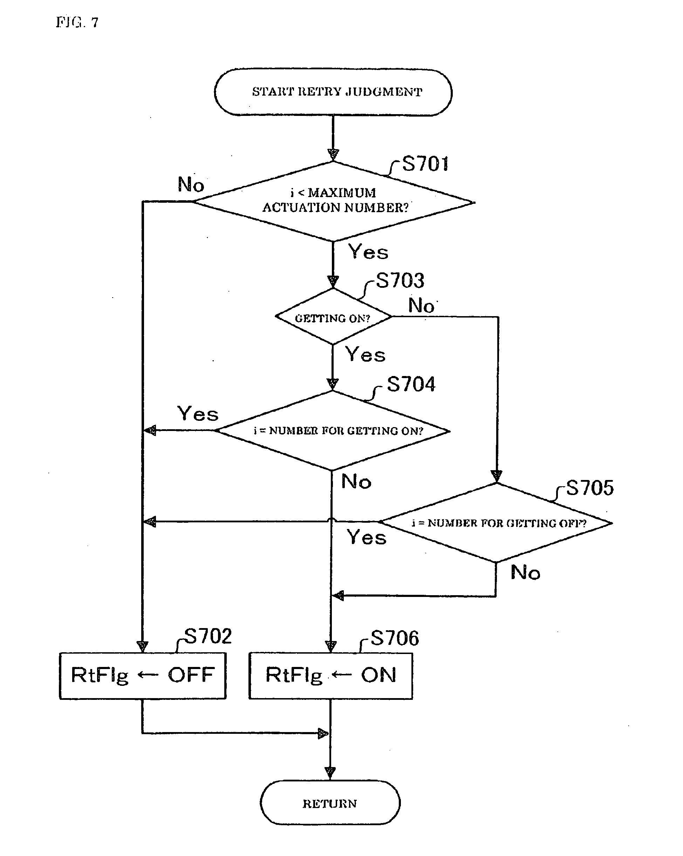

Then, the retry judgment is carried out by the retry determining section 405 (Step S609). Fig. 7 is a flow chart showing procedures of the retry judgment according to this embodiment.

First, the retry determining section 405 determines whether or not the motor actuation number (i) is lower than the maximum actuation number (Step S701). The maximum actuation number is an upper limit of the motor actuation number and is set to five in this embodiment. The maximum actuation number is also stored in the control parameter table similarly to the maximum process time as mentioned above. When the motor actuation number (i) reaches the maximum actuation number (No in step S701), the retry determining section 405 determines that it is impossible to wind up the seat belt 2 due to the completion of winding-up of the seat belt 2 or some other reason so that the retry is not required. As a result of this, the retry determining section 405 sets the RtFlg to be OFF (Step S702) and terminates this process (the retry judgment).

On the other hand, when the motor actuation number (i) is lower than the maximum actuation number (Yes in step 5701), the retry determining section 405 checks whether the result of detection by the getting-on/off action detecting section 401 is an action for getting on the vehicle or an action for getting off the vehicle. When the result is an action for getting on the vehicle (Yes in step S703), the process of step S704 is conducted. When the result is an action for getting off the vehicle (No in step S703), the process of step S705 is conducted.

In step S704, it is checked whether the motor actuation number (i) reaches the reference number of times for the case that the occupant gets on the vehicle (the number for getting on) stored in the control parameter table. As a result of this, when the motor actuation number (i) does not reaches the number for getting on (for example, two) (No in step S704), the retry determining section 405 determines that the retry is required and sets the RtFlg to be ON (Step S706), and then terminates this process. On the other hand, when the motor actuation number (i) reaches the number for getting on (Yes in step S704), the retry determining section 405 determines that the winding-up of the seat belt 2 is completed so that the retry is not required (step S702).

In step S705, it is checked whether the motor actuation number (i) reaches the reference number of times for the case that the occupant gets off the vehicle (the number for getting off) stored in the control parameter table. As a result of this, when the motor actuation number (i) does not reaches the number for getting off (for example, four) (No in step S705), the retry determining section 405 determines that the retry is required (Step S706). On the other hand, when the motor actuation number (i) reaches the number for getting off (Yes in step S705), the retry determining section 405 determines that the winding-up of the seat belt 2 is completed so that the retry is not required (step S702).

Returning to the flow chart of Fig. 6, when it is determined that the retry is not required as a result of the aforementioned retry judgment (No in step S610), the control unit 123 terminates the process (the seat belt winding-up process). On the other hand, when it is determined that the retry is required (Yes in step S610), the control unit 123 waits the process until a preset waiting time (for example, two seconds) stored in the control parameter table elapses (Step S611) and, after that, repeats the process from step S603.

As mentioned above, the seat belt retractor of this embodiment conducts the winding-up of the seat belt 2 (carries out the seat belt winding-up process) not only when the occupant gets off the vehicle but also when the occupant gets on the vehicle. Therefore, even when the seat belt winding-up process when the occupant gets off the vehicle last time is not completed, it is highly likely that the seat belt 2 becomes to a state that the winding-up is completed or nearly completed before the occupant H sits down. In the seat belt winding-up process for the case that the occupant gets on the vehicle, the number of times of retrying the winding-up is set to be smaller than that for the case that the occupant gets off the vehicle, thereby reducing the frequency of unnecessary actuations of the motor 114.

It should be understood that the present invention is not limited to the embodiment and various changes could be made without departing from the scope of the invention.

For example, the retry determining section 405 may determine that further winding-up action is not required (the retry is not required) when the motor actuating time period is shorter than a predetermined time period (for example, 0.5 second) a predetermined number of times in a row according to the getting-on/off action of the occupant. In this case, a reference number of times for the case that the occupant gets on (the fourth number of times) and a reference number of times for the case that the occupant gets off (the third number of times) are respective criteria for the case that the occupant gets on and for the case that the occupant gets off such that the fourth number of times is smaller than the third number of times (for example, the third number of times is two and the fourth number of times is one).

The motor actuating time period is a time period from the start of actuation of the motor 114 (a point when the control unit 123 outputs an actuation signal (PWM signal, a control signal indicating the rotational direction of the motor 114) to the motor driver 121) to the stop of the actuation of the motor 114 (a point when the control unit 123 outputs a stopping signal to the motor driver 121) and is clocked by a software timer.

In general, as the motor is actuated in the state where the winding-up is impossible such as when the winding-up of the seat belt is completed or when it is impossible to release the catching of the seat belt, an overload is applied to the motor immediately after (i.e. shortly after) the actuation. Therefore, when the motor actuating time period is short, it is extremely highly probable that the seat belt is in the state where winding-up is impossible. Therefore, the aforementioned arrangement further improves the efficiency of the winding-up action.

Further, the action of the occupant H for getting off the vehicle to be detected by the getting-on/off action detecting section 401 is not limited to the action of the occupant H releasing the tongue plate 5 from the buckle 6, i.e. cancelling the wearing of the seat belt 2. For example, the getting-on/off action detecting section 401 may determine that the occupant takes the action for getting off the vehicle when the occupant H cancels the wearing of the seat belt 2 and opens the door (a door open signal is outputted from the door sensor 7).

For further ensuring the winding-up of the seat belt 2, the seat belt winding process may be started by the cancellation of wearing of the seat belt 2 and the door open as triggers. In this case, there may be the following two conditions.
(1) Case that the wearing of the seat belt 2 is cancelled and then the door is opened
   In this case, first a wearing cancellation signal from the seat belt wearing sensor 61 is inputted to the control unit 123 so that the seat belt winding up process is conducted and the winding-up of the seat belt 2 is continued until the predetermined termination condition is satisfied as described in the embodiment. As a door open signal from the door open sensor 7 is inputted to the control unit 123, the seat belt winding-up process is conducted again. It should be noted that when a door open signal is inputted to the control unit 123 during the seat belt winding-up process according to the cancellation of wearing of the seat belt 2, the seat belt winding-up process according to the door open is started immediately after the end of the seat belt winding-up process according to the cancellation of wearing of the seat belt 2.
(2) Case that the door is open and then the wearing of the seat belt 2 is cancelled
   In this case, first a wearing cancellation signal from the seat belt wearing sensor 61 is inputted to the control unit 123 so that the seat belt winding-up process according to the cancellation of wearing of the seat belt 2 is conducted and, after that, the seat belt winding-up process based on the door open is started soon.

The method of detecting an overload of the motor 114 by the overload detecting section 402 is not limited to the method based on current value (motor current value) detected by the current sensor 122 and may be any of various well-known detecting methods. For example, the controller 12 and a sensor for measuring the tension of the seat belt 2 are connected by a wire and the overload detecting section 402 may detect an overload of the motor 114 based on the magnitude of the tension applied on the seat belt 2.

Though the aforementioned embodiment has been described with reference to an example where the seat belt apparatus is mounted to the motor vehicle seat, the present invention may be applied to an airplane in which a seat belt apparatus is mounted to a seat, not limited to the motor vehicle.

The order of the respective processes in the flow charts described in the aforementioned embodiment is not limited to the order as described, the order may be changed without departing from the scope of the invention.

The function of the control unit 123 can be achieved by hardware for exclusive use, not limited to the software.

## Claims

1. A seat belt retractor comprising:
a seat belt winding means (11) for winding up a seat belt (2) by means of actuation of a motor (114); and
a control means (123) which repeats, under a predetermined condition, a process of stopping the actuation of said motor (114) when an overload of said motor (114) is detected, and restarting the actuation of said motor (114) after a lapse of a predetermined time period,
**characterized in that**
said control means (123) comprises:
a getting-on/off action detecting means (401) for detecting an action of an occupant (H) for getting on or off a vehicle; and
a retry determining means (405) which determines, using criteria, whether or not it is required to restart the actuation of said motor (114) which is stopped by detection of the overload, wherein the criteria for the case that the occupant (H) gets on the vehicle and for the case that the occupant (H) gets off the vehicle are different from each other,
wherein in the case that the occupant (H) gets off the vehicle, said retry determining means (405) determines that it is not required to restart the actuation of said motor (114) when a number of times (i) of starting the actuation of said motor (114) reaches a first number of times, and
wherein in the case that the occupant (H) gets on the vehicle, said retry determining means (405) determines that it is not required to restart the actuation of said motor (114) when the number of times (i) of starting the actuation of said motor (114) reaches a second number of times lower than said first number of times.

2. A seat belt retractor as claimed in claim 1, wherein said control means (123) further comprises a means (403) for clocking a motor actuating time period from the start to the stop of the actuation of said motor (114), wherein
in the case that the occupant (H) gets off the vehicle, said retry determining means (405) determines that it is not required to restart the actuation of said motor (114) when said motor actuating time period (T) is shorter than a predetermined time period a third number of times in a row, and
in the case that the occupant (H) gets on the vehicle, said retry determining means (405) determines that it is not required to restart the actuation of said motor (114) when said motor actuating time period (T) is shorter than the predetermined time period a fourth number of times in a row, said fourth number of times being smaller than said third number of times.

3. A seat belt retractor as claimed in claim 1 or claim 2, wherein
a signal indicating the wearing or non-wearing of the seat belt (2) and a signal indicating the door open or close are inputted into said control means (123), and
said getting-on/off action detecting means (401) detects an action of the occupant (H) for getting on or off the vehicle according to these signals.

4. A seat belt apparatus comprising:
a seat belt (2);
a tongue plate (5) which is slidably attached to said seat belt (2);
a buckle (6) to which said tongue plate (5) is inserted and latched; and
a seat belt retractor (1) as claimed in any one of claims 1 through 3.

5. A seat belt winding method for repeating, under a predetermined condition, a process of stopping the actuation of a motor (114), which provides power for winding up a seat belt (2), when an overload of said motor (114) is detected during the actuation of said motor (114), and restarting the actuation of said motor (114) after a lapse of a predetermined time period,
**characterized by** the steps
a getting-on/off action detecting step (S703) for detecting an action of an occupant (H) for getting on/off the vehicle; and
a retry determining step (S609) for determining, using criteria, whether or not it is required to restart the actuation of said motor (114) which is stopped by detection of the overload, wherein the criteria for the case that the occupant (H) gets on the vehicle and for the case that the occupant (H) gets off the vehicle are different from each other,
wherein in said retry determining step (S609), in the case that the occupant (H) gets off the vehicle, it is determined that it is not required to restart the actuation of said motor (114) when a number of times (i) of starting the actuation of said motor (114) reaches a first number of times, and
wherein in said retry determining step (S609), in the case that the occupant (H) gets on the vehicle, it is determined that it is not required to restart the actuation of said motor (114) when the number of times (i) of starting the actuation of said motor (114) reaches a second number of times lower than said first number of times.

6. A seat belt winding method as claimed in claim 5, further comprising a step of clocking a motor actuating time period (T) from the start to the stop of the actuation of said motor (114),
wherein in said retry determining step (S609), in the case that the occupant (H) gets off the vehicle, it is determined that it is not required to restart the actuation of said motor (114) when said motor actuating time period (T) is shorter than a predetermined time period a third number of times in a row, and
wherein in said retry determining step (S609), in the case that the occupant (H) gets on the vehicle, it is determined that it is not required to restart the actuation of said motor (114) when said motor actuating time period (T) is shorter than the predetermined time period a fourth number of times in a row, said fourth number of times being smaller than said third number of times.

7. A seat belt winding method as claimed in claim 5 or claim 6, wherein
in said getting-on/off action detecting step (S703), an action of the occupant (H) for getting on/off the vehicle is detected based on a signal indicating the wearing or non-wearing of the seat belt (2) and a signal indicating the door open or close.

## Patentansprüche

1. Sitzgurt-Aufrollvorrichtung, umfassend:
ein Sitzgurt-Aufwickel-Mittel (11), um einen Sitzgurt (2) mittels einer Betätigung eines Motors (114) aufzuwickeln; und
ein Steuermittel (123), welches unter einer vorbestimmten Bedingung einen Prozess eines Anhaltens der Betätigung des Motors (114), wenn eine Überlast des Motors (114) erfasst wird, und eines Wiederaufnehmens der Betätigung des Motors (114) nach einer vorbestimmten Zeitperiode wiederholt,
**dadurch gekennzeichnet,**
**dass** das Steuermittel (123) umfasst:
ein Ein-/Ausstiegs-Erfassungsmittel (401), um einen Vorgang eines Insassen (H) zu erfassen, um in ein Fahrzeug einzusteigen oder aus dem Fahrzeug auszusteigen; und
ein Wiederholungsbestimmungsmittel (405), welches anhand von Kriterien bestimmt, ob es erforderlich ist, die Betätigung des Motors (114), welcher durch Erfassen der Überlast angehalten wurde, wieder aufzunehmen, wobei die Kriterien für den Fall, dass der Insasse (H) in das Fahrzeug einsteigt, und für den Fall, dass der Insasse (H) aus dem Fahrzeug aussteigt, unterschiedlich voneinander sind,
**dass** für den Fall, dass der Insasse (H) aus dem Fahrzeug aussteigt, das Wiederholungsbestimmungsmittel (405) bestimmt, dass es nicht erforderlich ist, die Betätigung des Motors (114) wieder aufzunehmen, wenn eine Wiederholungsanzahl (i) zum Starten der Betätigung des Motors (114) eine erste Anzahl erreicht, und
**dass** für den Fall, dass der Insasse (H) in das Fahrzeug einsteigt, das Wiederholungsbestimmungsmittel (405) bestimmt, dass es nicht erforderlich ist, die Betätigung des Motors (114) wieder aufzunehmen, wenn die Wiederholungsanzahl (i) zum Starten der Betätigung des Motors (114) eine zweite Anzahl erreicht, welche geringer als die erste Anzahl ist.

2. Sitzgurt-Aufrollvorrichtung nach Anspruch 1,
**dadurch gekennzeichnet,**
**dass** das Steuermittel (123) darüber hinaus ein Mittel (403) umfasst, um eine Motorbetätigungszeitspanne von dem Start bis zu dem Anhalten der Betätigung des Motors (114) zu messen,
**dass** für den Fall, dass der Insasse (H) aus dem Fahrzeug aussteigt, das Wiederholungsbestimmungsmittel (405) bestimmt, dass es nicht erforderlich ist, die Betätigung des Motors (114) wieder aufzunehmen, wenn die Motorbetätigungszeitspanne (T) eine dritte Anzahl oft hintereinander kürzer als eine vorbestimmte Zeitspanne ist, und
**dass** für den Fall, dass der Insasse (H) in das Fahrzeug einsteigt, das Wiederholungsbestimmungsmittel (405) bestimmt, dass es nicht erforderlich ist, die Betätigung des Motors (114) wieder aufzunehmen, wenn die Motorbetätigungszeitspanne (T) eine vierte Anzahl oft hintereinander kürzer als die vorbestimmte Zeitspanne ist, wobei die vierte Anzahl kleiner als die dritte Anzahl ist.

3. Sitzgurt-Aufrollvorrichtung nach Anspruch 1 oder Anspruch 2,
**dadurch gekennzeichnet,**
**dass** ein Signal, welches das Tragen oder Nicht-Tragen des Sitzgurtes (2) anzeigt, und ein Signal, welches anzeigt, ob die Tür offen oder geschlossen ist, dem Steuermittel (123) zugeführt werden, und
**dass** das Ein-/Ausstiegs-Erfassungsmittel (401) einen Vorgang des Insassen (H), um in das Fahrzeug einzusteigen oder aus dem Fahrzeug auszusteigen, über diese Signale erfasst.

4. Sitzgurt-Vorrichtung umfassend:
einen Sitzgurt (2);
eine Zungenplatte (5), welche gleitend an dem Sitzgurt (2) angebracht ist;
ein Gurtschloss (6), in welches die Zungenplatte (5) eingeführt und mit welcher diese verriegelt wird; und
eine Sitzgurt-Aufrollvorrichtung (1) nach einem der Ansprüche 1 bis 3.

5. Sitzgurt-Aufwickelverfahren, um unter einer vorbestimmten Bedingung einen Prozess eines Anhaltens der Betätigung eines Motors (114), welcher eine Leistung zum Aufwickeln eines Sitzgurtes (2) bereitstellt, wenn eine Überlast des Motors (114) während der Betätigung des Motors (114) erfasst wird, und eines Wiederaufnehmens der Betätigung des Motors (114) nach einer vorbestimmten Zeitspanne zu wiederholen,
**gekennzeichnet durch** die Schritte
einen Ein-/Ausstiegs-Erfassungsschritt (S703), um einen Vorgang eines Insassen (H) zu erfassen, um in das Fahrzeug einzusteigen/aus dem Fahrzeug auszusteigen; und
einen Wiederholungsbestimmungsschritt (S609), um anhand von Kriterien zu bestimmen, ob es erforderlich ist, die Betätigung des Motors (114), welcher beim Erfassen der Überlast angehalten wurde, wieder aufzunehmen oder nicht, wobei die Kriterien für den Fall, dass der Insasse (H) in das Fahrzeug einsteigt, und für den Fall, dass der Insasse (H) aus dem Fahrzeug aussteigt, unterschiedlich voneinander sind,
wobei bei dem Wiederholungsbestimmungsschritt (S609) für den Fall, dass der Insasse (H) aus dem Fahrzeug aussteigt, bestimmt wird, dass es nicht erforderlich ist, die Betätigung des Motors (114) wieder aufzunehmen, wenn ein Starten der Betätigung des Motors (114) eine erste Anzahl oft erfolgt ist, und
wobei bei dem Wiederholungsbestimmungsschritt (S609) für den Fall, dass der Insasse (H) in das Fahrzeug einsteigt, bestimmt wird, dass es nicht erforderlich ist, die Betätigung des Motors (114) wieder aufzunehmen, wenn ein Starten der Betätigung des Motors (114) eine zweite Anzahl oft erfolgt, welche geringer als die erste Anzahl ist.

6. Sitzgurt-Aufwickelverfahren nach Anspruch 5, darüber hinaus einen Schritt eines Messens einer Motorbetätigungszeitspanne (T) von dem Start bis zu dem Anhalten der Betätigung des Motors (114) umfassend,
wobei bei dem Wiederholungsbestimmungsschritt (S609) für den Fall, dass der Insasse (H) aus dem Fahrzeug aussteigt, bestimmt wird, dass es nicht erforderlich ist, die Betätigung des Motors (114) wieder aufzunehmen, wenn die Motorbetätigungszeitspanne (T) eine dritte Anzahl oft kürzer als eine vorbestimmte Zeitspanne ist, und
wobei bei dem Wiederholungsbestimmungsschritt (S609) für den Fall, dass der Insasse (H) in das Fahrzeug einsteigt, bestimmt wird, dass es nicht erforderlich ist, die Betätigung des Motors (114) wieder aufzunehmen, wenn die Motorbetätigungszeitspanne (T) eine vierte Anzahl oft kürzer als die vorbestimmte Zeitspanne ist, wobei die vierte Anzahl kleiner als die dritte Anzahl ist.

7. Sitzgurt-Aufwickelverfahren nach Anspruch 5 oder Anspruch 6,
**dadurch gekennzeichnet,**
**dass** bei dem Ein-/Ausstiegs-Erfassungs-Schritt (S703) ein Vorgang des Insassen (H), um in das Fahrzeug einzusteigen/aus dem Fahrzeug auszusteigen abhängig von einem Signal, welches das Tragen oder Nicht-Tragen des Sitzgurtes (2) anzeigt und von einem Signal, welches anzeigt, ob die Tür offen oder geschlossen ist, erfasst wird.

## Revendications

1. Rétracteur de ceinture de sécurité, comprenant :
des moyens d'enroulement de ceinture de sécurité (11), pour enrouler une ceinture de sécurité (2) au moyen de l'actionnement d'un moteur (114) ; et
des moyens de commande (123) répétant, dans des conditions prédéterminées, un processus d'arrêt de l'actionnement dudit moteur (114) lorsqu'une surcharge dudit moteur (114) est détectée, et redémarrant l'actionnement dudit moteur (114) après expiration d'une période de temps prédéterminée ;
**caractérisé en ce que**
lesdits moyens de commande (123) comprennent :
des moyens de détection d'action d'entrée/sortie (401), pour détecter une action d'un occupant (H) pour entrer ou sortir d'un véhicule ; et
des moyens de détermination de retentative (405), déterminant, en utilisant des critères, si ou non il est nécessaire de relancer l'actionnement dudit moteur (114) qui est stoppé par détection de la surcharge, dans lequel les critères pour le cas dans lequel l'occupant (H) entre dans le véhicule et pour le cas dans lequel l'occupant (H) sort du véhicule sont différents l'un de l'autre,
dans lequel, dans le cas dans lequel l'occupant (H) sort du véhicule, lesdits moyens de détermination de retentative (405) déterminent qu'il n'est pas nécessaire de relancer l'actionnement dudit moteur (114) lorsqu'un nombre de fois (i) auxquelles l'actionnement dudit moteur (114) a été lancé atteint un premier nombre de fois, et
dans lequel, dans le cas dans lequel l'occupant (H) entre dans le véhicule, lesdits moyens de détermination de retentative (405) déterminent qu'il n'est pas nécessaire de relancer l'actionnement dudit moteur (114) lorsque le nombre de fois (i) auxquelles l'actionnement dudit moteur (114) a été lancé atteint un deuxième nombre de fois, inférieur au premier nombre de fois.

2. Rétracteur de ceinture de sécurité selon la revendication 1, dans lequel lesdits moyens de commande (123) comprennent en outre des moyens (403) pour positionner temporellement une période de temps d'actionnement de moteur, allant du lancement à l'arrêt de l'actionnement dudit moteur (114), dans lequel :
dans le cas dans lequel l'occupant (H) sort du véhicule, lesdits moyens de détermination de retentative (405) déterminent qu'il n'est pas nécessaire de relancer l'actionnement dudit moteur (114) lorsque ladite période de temps d'actionnement de moteur (T) est plus courte qu'une période de temps prédéterminée, un troisième nombre de fois à la suite, et
dans le cas dans lequel l'occupant (H) entre dans le véhicule, lesdits moyens de détermination de retentative (405) déterminent qu'il n'est pas nécessaire de relancer l'actionnement dudit moteur (114) lorsque ladite période de temps d'actionnement de moteur (T) est plus courte que la période de temps prédéterminée, un quatrième nombre de fois à la suite, ledit quatrième nombre de fois étant inférieur audit troisième nombre de fois.

3. Rétracteur de ceinture de sécurité selon la revendication 1 ou la revendication 2, dans lequel :
un signal, indiquant le port ou le non port de la ceinture de sécurité (2), et un signal, indiquant que la portière est ouverte ou fermée, sont introduits dans lesdits moyens de commande (123), et
lesdits moyens de détection d'action d'entrée/sortie (401) détectent une action de l'occupant (H) pour entrer ou sortir du véhicule, selon ces signaux.

4. Appareil de ceinture de sécurité, comprenant :
une ceinture de sécurité (2) ;
une plaque formant languette (5), attachée à coulissement sur ladite ceinture de sécurité (2) ;
une boucle (6), sur laquelle ladite plaque formant languette (5) est insérée et verrouillée ; et
un rétracteur de ceinture de sécurité (1), tel que revendiqué selon l'une quelconque des revendications 1 à 3.

5. Procédé d'enroulement de ceinture de sécurité pour accomplir de manière répétitive, dans des conditions prédéterminées, un processus d'arrêt de l'actionnement d'un moteur (114), fournissant de l'énergie pour enrouler une ceinture de sécurité (2), lorsqu'une surcharge dudit moteur (114) est détectée durant l'actionnement dudit moteur (114), et relancer l'actionnement dudit moteur (114) après expiration d'une période de temps prédéterminée,
**caractérisé par** les étapes ci-après :
une étape de détection d'action d'entrée/sortie (703), pour détecter une action d'un occupant (H), pour entrer/sortir du véhicule ; et
une étape de détermination de retentative (S609), pour déterminer, en utilisant des critères, s'il est nécessaire ou non de relancer l'actionnement dudit moteur (114) qui est stoppé par détection de la surcharge, dans lequel les critères pour le cas dans lequel l'occupant (H) entre dans le véhicule et pour le cas dans lequel l'occupant (H) sort du véhicule sont différents l'un de l'autre,
dans lequel, dans ladite étape de détermination de retentative (S609), dans le cas dans lequel l'occupant (H) sort du véhicule, il est déterminé qu'il n'est pas nécessaire de relancer l'actionnement dudit moteur (114) lorsqu'un nombre de fois (i) auxquelles l'actionnement dudit moteur (114) a été lancé atteint un premier nombre de fois, et
dans lequel, dans ladite étape de détermination de retentative (S609), dans le cas dans lequel l'occupant (H) entre dans le véhicule, il est déterminé qu'il n'est pas nécessaire de relancer l'actionnement dudit moteur (114) lorsque le nombre de fois (i) auxquelles l'actionnement dudit moteur (114) a été lancé atteint un deuxième nombre de fois, inférieur au premier nombre de fois.

6. Procédé d'enroulement de ceinture de sécurité selon la revendication 5, comprenant en outre une étape de positionnement temporel d'une période de temps d'actionnement de moteur (T), allant du lancement à l'arrêt de l'actionnement dudit moteur (114),
dans lequel, dans ladite étape de détermination de retentative (S609), dans le cas dans lequel l'occupant (H) sort du véhicule, il est déterminé qu'il n'est pas nécessaire de relancer l'actionnement dudit moteur (114) lorsque ladite période de temps d'actionnement de moteur (T) est plus courte qu'une période de temps prédéterminée un troisième nombre de fois à la suite, et
dans lequel, dans ladite étape de détermination de retentative (S609), dans le cas dans lequel l'occupant (H) entre dans le véhicule, il est déterminé qu'il n'est pas nécessaire de relancer l'actionnement dudit moteur (114) lorsque ladite période de temps d'actionnement de moteur (T) est plus courte qu'une période de temps prédéterminée un quatrième nombre de fois à la suite, ledit quatrième nombre de fois étant inférieur audit troisième nombre de fois.

7. Procédé d'enroulement de ceinture de sécurité selon la revendication 5 ou la revendication 6, dans lequel,
dans ladite étape de détection d'action d'entrée/sortie (S703), une action d'entrée/sortie de l'occupant (H), pour entrer/sortir du véhicule, est détectée d'après un signal, indiquant le port ou le non port de la ceinture de sécurité (2), et un signal, indiquant que la portière est ouverte ou fermée.
